(19) Europäisches Patentamt
European Patent Office
Office européen des brevets

(11) EP 1 621 572 A1

(12) # EUROPEAN PATENT APPLICATION
published in accordance with Art. 158(3) EPC

(43) Date of publication:
**01.02.2006 Bulletin 2006/05**

(21) Application number: **04714492.8**

(22) Date of filing: **25.02.2004**

(51) Int Cl.:
***C08J 7/00*** *(1974.07)*

(86) International application number:
**PCT/JP2004/002211**

(87) International publication number:
**WO 2004/081091 (23.09.2004 Gazette 2004/39)**

(84) Designated Contracting States:
**AT BE BG CH CY CZ DE DK EE ES FI FR GB GR HU IE IT LI LU MC NL PT RO SE SI SK TR**

(30) Priority: **13.03.2003 JP 2003067813**

(71) Applicant: **JSR Corporation**
**Tokyo 104-8410 (JP)**

(72) Inventors:
- **REIBA, Tsutomu,**
  **Jsr Corporation**
  **Chuo-ku, Tokyo 1048410 (JP)**
- **NAKAZAWA, Kazuyoshi,**
  **Jsr Corporation**
  **Chuo-ku, Tokyo 1048410 (JP)**
- **MORI, Yoshihiro,**
  **Jsr Corporation**
  **Chuo-ku, Tokyo 1048410 (JP)**
- **SAWADA, Katsutoshi,**
  **Jsr Corporation**
  **Chuo-ku, Tokyo 1048410 (JP)**
- **OSHIMA, Noboru,**
  **Jsr Corporation**
  **Chuo-ku, Tokyo 1048410 (JP)**

(74) Representative: **TBK-Patent**
**Bavariaring 4-6**
**80336 München (DE)**

(54) **METHOD FOR TREATMENT OF FILM OR SHEET**

(57) A film or sheet containing an optionally crosslinked organic polymer having a high degree of crosslinking and having a little amount of residual solvent is obtained within a short period of time under a low pressure by bringing a film or sheet containing an organic polymer into contact with a superheated water vapor.

EP 1 621 572 A1

## Description

TECHNICAL FIELD

The present invention relates to a method for treatment of a film or sheet containing an organic polymer. More particularly, the invention relates to a method for treatment of a film or sheet comprising treating a film or sheet containing an organic polymer and the like by bringing it into contact with a superheated water vapor.

BACKGROUND ART

Following high performance, high density, miniaturization, or the like of electronic instruments such as liquid crystal display devices, electroluminescence display devices, and touch panels, characteristics which are required for optical resin materials to be used therefor, such as transparency, birefringence, heat resistance, chemical resistance, and dimensional stability, have become severe more likely as compared with conventional cases.
As a method for production of films or sheets having a low birefringence, there is known a so-called solution casting method in which a polymer is dissolved in a solvent, the resulting solution is cast, and the solvent is then dried. For the purpose of enhancing the dimensional stability, it is required that the residual solvent in the film or sheet is removed to an extent of not more than 1 %. However, in the case of solvent removal using a drying furnace as generally applied in the conventional solution casting method, in order to reduce the amount of the residual solvent in the resulting film or sheet to an extent of not more than 1 %, a multi-stage drying step including primary drying and secondary drying or a huge space for the drying furnace was necessary, and considerable energy and considerable labor were required.
Furthermore, in films or sheets as prepared by melt molding such as extrusion molding, though the amount of a residual solvent is usually low, the solvent may possibly remain in the film or sheet depending upon a raw material to be used. In such case, it is similarly required that the amount of the residual solvent is reduced to an extent of not more than 1 %.
On the other hand, as a method for improving the chemical resistance of a film or sheet, there is proposed a method for crosslinking a film or sheet containing a specific cyclic olefin based resin. That is, as a technology for crosslinking a film or sheet containing a cyclic olefin based resin having a hydrolyzable functional group in the presence of water, there is proposed a method for treatment with a saturated water vapor (JP-A-2003-48918). However, it cannot be always said that this method is satisfactory as a technology for removing the residual solvent in the film or sheet. Also, if it is intended to carry out the crosslinking at a low temperature, the crosslinking time becomes long.
The invention is to provide a treatment method for obtaining an organic polymer film or sheet having a low amount of residual solvent and having excellent dimensional stability and a treatment method for obtaining a crosslinked organic polymer film or sheet having excellent chemical resistance.

DISCLOSURE OF THE INVENTION

In order to solve the foregoing problems of the related art, the present inventors made extensive and intensive investigations. As a result, it has been found that by bringing a film or sheet containing an organic polymer into contact with a gas containing a superheated water vapor, and preferably a superheated water vapor of from 100 to 300°C and from 0.001 to 0.5 MPaA, a residual solvent in the film or sheet can be removed and reduced within a short period of time, thereby obtaining an organic polymer film or sheet having excellent dimensional stability.
Furthermore, it has been found that in the case where a hydrolyzable silyl group is introduced into a specific cyclic olefin based polymer as an organic polymer and its film or sheet is subjected to the same treatment, a crosslinked film or sheet which is not only low in the amount of residual solvent and excellent in dimensional stability but also excellent in chemical resistance is obtained within a short period of time, leading to accomplishment of the invention.

BEST MODE FOR CARRYING OUT THE INVENTION

The contents of the invention will be hereunder described in detail.
The superheated water vapor as defined in the invention is a water vapor as heated at a specific temperature or higher such that a vapor and a liquid can keep an equilibrium state under a certain pressure and may be also generally called as superheated steam or superheated steam. For example, a water vapor as heated at 100°C or higher at one atmosphere is the superheated water vapor.
In the invention, organic polymers with high heat resistance, such as cyclic olefin based polymers and aromatic polymers, can be used as the organic polymer.
The cyclic olefin based polymer which is used in the invention contains a structural unit (a) represented by the following formula (1-1) or a structural unit (b) represented by the following formula (1-2) in an amount of from 70 to 100

% by mole in the whole of structural units.

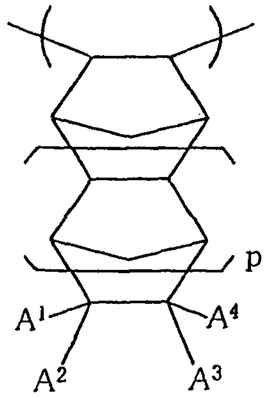

(1-1)

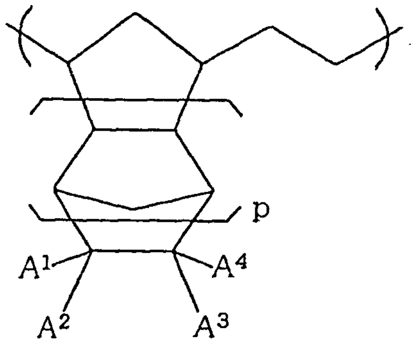

(1-2)

[In the formulae (1-1) and (1-2), $A^1$ to $A^4$ each independently represents a hydrogen atom, a halogen atom, an alkyl group having from 1 to 20 carbon atoms, a halogenated alkyl group, an aryl group, an alkoxy group, an alkoxycarbonyl group, or a cycloalkyl group having from 4 to 15 carbon atoms. Also, $A^1$ to $A^4$ include an alkylene group, a carboimido group, and an ester group as formed from $A^1$ and $A^2$, $A^1$ and $A^3$, or $A^2$ and $A^4$. p represents an integer of from 0 to 2.]

Such a structural unit (a) is formed by addition polymerization of a cyclic olefin compound represented by the following formula (3) (hereinafter referred to as "specific monomer (1)"). Also, the structural unit (b) is formed by ring-opening polymerization of the "specific monomer (1)" and subsequently hydrogenation.

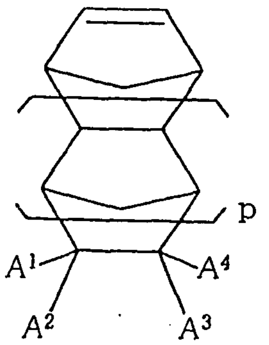

(3)

[In the formula (3), $A^1$ to $A^4$ and p are the same as in the definitions of the formulae (1-1) and (1-2).]

As specific examples of the "specific monomer (1)" represented by the formula (3), the following compounds are enumerated, but it should not be construed that the invention is limited to these specific examples.

Bicyclo[2.2.]hept-2-ene

5-Methyl-bicyclo[2.2.1]hept-2-ene

5-Ethyl-bicyclo[2.2.1]hept-2-ene

5-Propyl-bicyclo[2.2.1]hept-2-ene

5-Butyl-bicyclo[2.2.1]hept-2-ene
5-Pentyl-bicyclo[2.2.1]hept-2-ene
5-Hexyl-bicyclo[2.2.1]hept-2-ene
5-Heptyl-bicyclo[2.2.]hept-2-ene
5-Octyl-bicyclo[2.2.1]hept-2-ene
5-Decyl-bicyclo[2.2.1]hept-2-ene
5-Dodecyl-bicyclo[2.2.1]hept-2-ene
5,6-Dimethyl-bicyclo[2.2.1]hept-2-ene
5-Methyl-5-ethyl-bicyclo[2.2.1]hept-2-ene
5-Phenyl-bicyclo[2.2.1]hept-2-ene
5-Cyclohexyl-bicyclo[2.2.1]hept-2-ene
5-Cyclooctyl-bicyclo[2.2.1]hept-2-ene
5-Fluoro-bicyclo[2.2.1]hept-2-ene
5-Chloro-bicyclo[2.2.1]hept-2-ene
5-Methoxy-bicyclo[2.2.1]hept-2-ene
5-Ethoxy-bicyclo[2.2.1]hept-2-ene
N-Phenyl-bicyclo[2.2.1]hept-2-ene-2,3-dicarboimide
N-Cyclohexyl-bicyclo[2.2.1]hept-2-ene-2,3-dicarboimide
5-Methoxycarbonyl-bicyclo[2.2.1]hept-2-ene
5-Methyl-5-methoxycarbonyl-bicyclo[2.2.1]hept-2-ene
5,6-Di(methoxycarbonyl)-bicyclo[2.2.1]hept-2-ene
Tricyclo[5.2.1.$0^{2,6}$]dec-8-ene
3-Methyltricyclo[5.2.1.$0^{2,6}$]dec-8-ene
4-Methyltricyclo[5.2.1. $0^{2,6}$]dec-8-ene
5-Methyltricyclo[5.2.1.$0^{2,6}$]dec-8-ene
Tricyclo[4.2.0.$1^{2,5}$]non-7-ene
3-Methyltricyclo[4.2.0.$1^{2,5}$]non-7-ene
Tricyclo[6.2.1.$0^{2,7}$]undec-9-ene
Tricyclo[8.2.1.$0^{2,9}$]tridec-11-ene
Tetracyclo[4.4.0.$1^{2,5}$.$1^{7,10}$]dodec-3-ene
8-Methyl-tetracyclo[4.4.0.$1^{2,5}$.$1^{7,10}$]dodec-3-ene
8-Ethyl-tetracyclo[4.4.0.$1^{2,5}$.$1^{7,10}$]dodec-3-ene
8-Methoxycarbonyl-tetracyclo[4.4.0.$1^{2,5}$.$1^{7,10}$]dodec-3-ene
8-Ethoxycarbonyl-tetracyclo[4.4.0.$1^{2,5}$.$1^{7,10}$]dodec-3-ene
8-Methyl-8-methoxycarbonyl-tetracyclo[4.4.0.$1^{2,5}$.$1^{7,10}$]dodec-3-ene

These compounds are used singly or in combinations of two or more kinds thereof

Also, by addition polymerization or ring-opening polymerization of a cyclic diolefin based compound which does not, however, correspond to the foregoing specific monomer (1), such as
5-vinyl-bicyclo[2.2.1]hept-2-ene,
5-(1-butenyl)-bicyclo[2.2.1]hept-2-ene,
5-vinylidene-bicyclo[2.2.1]hept-2-ene,
tricyclo[5.2.1.$0^{2,6}$]deca-3,8-diene,
tricyclo[6.2.1.$0^{2,7}$]undeca-3,9-diene,
tricyclo[6.2.1.$0^{2,7}$]undeca-4,9-diene,
tricyclo[6.2.1.$0^{2,7}$]undeca-4,8-diene,
tricydo[8.2.1.$0^{2,9}$]trideca-7,11-diene,
tricyclo[8.2.1.$0^{2,9}$]trideca-6,11-diene, and
tricydo[8.2.1.$0^{2,9}$]trideca-5,11-diene,
and subsequently hydrogenation of an olefinically unsaturated bond present in the side chain thereof, it is possible to form the structural unit (a) or structural unit (b).

Of these monomers, the following are preferable.
Bicyclo[2.2.1]hept-2-ene
5-Methyl-bicyclo[2.2.1]hept-2-ene
5-Ethyl-bicyclo[2.2.1]hept-2-ene
5-Butyl-bicyclo[2.2.1]hept-2-ene
5-Hexyl-bicyclo[2.2.1]hept-2-ene
Tricyclo[5.2.1.$0^{2,6}$]dec-8-ene
Tricyclo[5.2.1.$0^{2,6}$]dec-3,8-diene

Tricyclo[6.2.1.0$^{2,7}$]undec-9-ene

Furthermore, when the structural unit (a) obtained by addition polymerization using tricyclo[5.2.1.0$^{2,6}$]dec-8-ene, tricyclo[5.2.1.0$^{2,6}$]deca-3,8-diene, or tricyclo[6.2.1.0$^{2,7}$]undec-9-ene, which contains at least 80 % of an endo body, or the structural unit (b) obtained by ring-opening polymerization and subsequently hydrogenation is contained in an amount of 10 % by mole or more in the whole of structural units, a crosslinked film or sheet having high toughness is obtained.

When a proportion of the structural unit (a) or structural unit (b) wherein $A^1$ to $A^4$ each represents a hydrogen atom and/or a hydrocarbon in the cyclic olefin based polymer to be used in the invention is 70 % by mole or more, and preferably 90 % by mole or more in the whole of structural units, the water absorption properties (hygroscopicity) of the subject polymer become low and the acid resistance is excellent, and therefore, such is preferable.

The cyclic olefin based polymer containing the structural unit (a) according to the invention may contain a structural unit (c) represented by the following formula (2-1). Such a structure unit (c) is formed by addition polymerization of a cyclic olefin represented by the following formula (4) (hereinafter referred to as "specific monomer (2)").

Furthermore, the cyclic olefin based polymer containing the structural unit (b) according to the invention may contain a structural unit (d) represented by the following formula (2-2). Such a structure unit (d) is formed by ring-opening polymerization of the "specific monomer (2)" and subsequently hydrogenation.

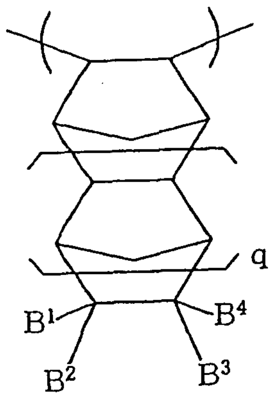

(2-1)

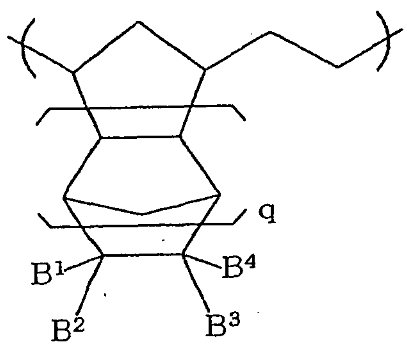

(2-2)

[In the formulae (2-1) and (2-2), $B^1$ to $B^4$ each independently represents a hydrogen atom, a halogen atom, an alkyl group having from 1 to 20 carbon atoms, a halogenated alkyl group, an aryl group, an alkoxy group, an alkoxycarbonyl group, a cycloalkyl group having from 4 to 15 carbon atoms, or a hydrolyzable silyl group, and at least one of $B^1$ to $B^4$ represents a hydrolyzable silyl group. Also, $B^1$ to $B^4$ include an alkylene group formed from $B^1$ and $B^3$, or $B^2$ and $B^4$. q represents an integer of from 0 to 2.]

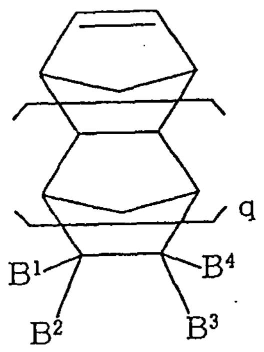

(4)

[In the formula (4), $B^1$ to $B^4$ and -q are the same as in the definitions of the formulae (2-1) and (2-2).]

As specific examples of the "specific monomer (2)" represented by the formula (4), the following compounds are enumerated, but it should not be construed that the invention is limited to these specific examples.

5-Methoxysilyl-bicyclo[2.2.1]hept-2-ene
5-Dimethoxychlorosilyl-bicyclo[2.2.1]hept-2-ene
5-Methoxychlorosilyl-bicyclo[2.2.1]hept-2-ene
5-Dimethoxychlorosilyl-bicyclo[2.2.1]hept-2-ene
5-Methoxyhydridomethylsilyl-bicyclo[2.2.1]hept-2-ene
5-Dimethoxyhydridosilyl-bicyclo[2.2.1]hept-2-ene
5-Methoxydimethylsilyl-bicyclo[2.2.1]hept-2-ene
5-Triethoxysilyl-bicyclo[2.2.1]hept-2-ene
5-Diethoxychlorosilyl-bicyclo[2.2.1]hept-2-ene
5-Ethoxychlorosilyl-bicyclo[2.2.1]hept-2-ene
5-Diethoxyhydridosilyl-bicyclo[2.2.1]hept-2-ene
5-Ethoxydimethylsilyl-bicyclo[2.2.1]hept-2-ene
5-Ethoxydiethylsilyl-bicyclo[2.2.1]hept-2-ene
5-Propoxydimethylsilyl-bicyclo[2.2.1]hept-2-ene
5-Tripropoxysilyl-bicyclo[2.2.1]hept-2-ene
5-Triphenoxysilyl-bicyclo[2.2.1]hept-2-ene
5-Trimethoxysilylmethyl-bicyclo[2.2.1]hept-2-ene
5-Dimethylchlorosilyl-bicyclo[2.2.1]hept-2-ene
5-Methyldichlorosilyl-bicyclo[2.2.1]hept-2-ene
5-Trichlorosilyl-bicyclo[2.2.1]hept-2-ene
5-Diethylchlorosilyl-bicyclo[2.2.1]hept-2-ene
5-Ethyldichlorosilyl-bicyclo[2.2.1]hept-2-ene
5-(2-Trimethoxysilyl)ethyl-bicyclo[2.2.1]hept-2-ene
5-(2-Dimethoxychlorosilyl)ethyl-bicyclo[2.2.1]hept-2-ene
5-(1-Trimethoxysilyl)ethyl-bicyclo[2.2.1]hept-2-ene
5-(2-Trimethoxysilyl)propyl-bicyclo[2.2.1]hept-2-ene
5-(1-Trimethoxysilyl)propyl-bicyclo[2.2.1]hept-2-ene
5-Triethoxysilylethyl-bicyclo[2.2.1]hept-2-ene
5-Dimethoxymethylsilylmethyl-bicyclo[2.2.1]hept-2-ene
5-Trimethoxypropylsilyl-bicyclo[2.2.1]hept-2-ene
5-Methyl-5-(3-triethoxysilyl)propoxycarbonyl-bicyclo[2.2.1]hept-2-ene
8-Triethoxysilyl-tetracyclo[4.4.0.$1^{2,5}$.$1^{7,10}$]dodec-3-ene
8-Methyldimethylsilyl-tetracyclo[4.4.0. $1^{2,5}$.$1^{7,10}$]dodec-3-ene
5-[1'-Methyl-2',5'-dioxa-1'-silacyclopentyl]-bicyclo[2.2.1]hept-2-ene
5-[1'-Methyl-3',3',4',4'-tetraphenyl-2',5'-dioxa-1'-silacyclopentyl]-bicyclo-[2.2.1]hept-2-ene
5-[1'-Methyl-3',3',4',4'-tetramethyl-2',5'-dioxa-1'-silacyclopentyl]-bicyclo-[2.2.1]hept-2-ene
5-[1'-Phenyl-2',5'-dioxa-1'-silacyclopentyl]-bicyclo[2.2.1]hept-2-ene
5-[1'-Ethyl-2',5'-dioxa-1'-silacyclopentyl]-bicyclo [2.2.1]hept-2-ene
5-[1',3'-Dimethyl-2',5'-dioxa-1'-silacyclopentyl]-bicyclo[2.2.1]hept-2-ene
5-[1'-Methyl-3',4'-dimethyl-2',5'-dioxa-1'-silacyclopentyl]-bicyclo[2.2.1]-hept-2-ene
5-[1'-Methyl-2',6'-dioxa-1'-silacyclohexyl]-bicyclo[2.2.1]hept-2-ene
5-[1'-Ethyl-2',6'-dioxa-1'-silacyclohexyl]-bicyclo [2.2.1]hept-2-ene

5-[1',3'-Dimethyl-2',6'-dioxa-1'-silacyclohexyl]-bicyclo[2.2,1]hept-2-ene
5-[1'-Methyl-4',4'-dimethyl-2',6'-dioxa-1'-silacyclohexyl]-bicyclo[2.2.1]-hept-2-ene
5-[1'-Methyl-4' ,4'-dimethyl-2',6'-dioxa-1'-silacyclohexyl]methyl-bicyclo-[2.2.1]hept-2-ene
5-[1'-Methyl-4',4'-dimethyl-2',6'-dioxa-1'-silacyclohexyl]ethyl-bicyclo-[2.2.1]hept-2-ene
5-[1'-Phenyl-4',4'-dimethyl-2',6'-dioxa-1'-silacyclohexyl]-bicyclo[2.2.1]-hept-2-ene
5-[1'-Methyl-4'-phenyl-2',6'-dioxa-1'-silacyclohexyl]-bicyclo[2.2.1]hept-2-ene
5-[1'-Methyl-4'-spiro-cyclohexyl-2',6'-dioxa-1'-silacyclohexyl]-bicyclo-[2.2.1]hept-2-ene
5-[1'-Methyl-4'-ethyl-4'-butyl-2',6'-dioxa-1'-silacyclohexyl]-bicyclo[2.2.1]-hept-2-ene
5-[1'-Methyl-3',3'-dimethyl-5'-methylene-2',6'-dioxa-1'-silacyclohexyl]-bicyclo[2.2.1]hept-2-ene
5-[1'-Phenyl-2',6'-dioxa-1'-silacyclohexyl]-bicyclo[2.2.1]hept-2-ene
5-[1'-Methyl-3'-phenyl-2',6'-dioxa-1'-silacyclohexyl]-bicyclo[2.2.1]hept-2-ene
5-[1'-Methyl-4',4'-dimethyl-2',6'-dioxa-1'-silacyclohexyl]-7-oxa-bicyclo-[2.2.1]hept-2-ene
5-[1'-Methyl-2',6'-dioxa-1'-silacyclohexyl]-7-oxa-bicyclo[2.2.1]hept-2-ene
5-[1'-Methyl-2',7'-dioxa-1'-silacyclohexyl]-bicyclo[2.2.1]hept-2-ene
8-[1'-Methyl-4',4'-dimethyl-2',6'-dioxa-1'-silacyclohexyl]tetracyclo-[4.4.0.$1^{2,5}$.$1^{7,10}$]dodec-3-ene
8-[1'-Methyl-2',6'-dioxa-1'-silacyclohexyl]-tetracyclo[4.4.0.$1^{2,5}$.$1^{7,10}$]-dodec-3-ene

The "specific monomer (2)" can be used singly or in combinations of two or more kinds thereof

A proportion of the structural unit (c) to be contained in the cyclic olefin based addition polymer according to the invention is from 0.5 to 30 % by mole, preferably from 1 to 20 % by mole, and more preferably from 2 to 10 % by mole in the whole of structural units. Incidentally, the arrangement of the structural unit (c) in the cyclic olefin based polymer is not limited, and examples thereof include a random form and a block form, with a random form being preferred.

When the proportion of the foregoing structural unit (c) is less than 0.5 % by mole, the density of crosslinking by a siloxane bond as formed by hydrolysis is low so that the chemical resistance and dimensional stability of the film or sheet as obtained after the treatment according to the invention may possibly become unsatisfactory. On the other hand, when that proportion exceeds 30 % by mole, the density of crosslinking by a siloxane bond is too high so that the treated film or sheet may possibly become fragile or have no toughness.

In the cyclic olefin based addition polymer according to the invention, a structural unit (e) which is obtained by addition polymerization of a "specific $\alpha$-olefin compound" or "specific conjugated diene" and optionally hydrogenation can be introduced.

Specific examples of such a "specific $\alpha$-olefin compound" include ethylene, propylene, 1-butene, 1-hexene, 1-octene, trimethylsilylethylene, triethylsilylethylene, and styrene, with ethylene being preferred.

Specific examples of such a "specific conjugated diene compound" include 1,3-butadiene, isoprene, 1,3-pentadiene, cyclopentadiene, and 1,3-cyclohexadiene, with 1,3-cyclohexadiene and cyclopentadiene being preferred.

These compounds can be used singly or in combinations of two or more kinds thereof

By introducing the repeating unit (e) derived from the "specific $\alpha$-olefin compound" in the polymer, it is possible to control a glass transition temperature of the cyclic olefin based addition polymer according to the invention. A proportion of the repeating unit (e) to be contained in the cyclic olefin based polymer according to the invention is usually from 0 to 25 % by mole, and preferably from 0 to 20 % by mole in the whole of structural units of the cyclic olefin based polymer. Incidentally, when the proportion of the repeating unit (e) exceeds 25 % by mole, the glass transition temperature of the cyclic olefin polymer according to the invention becomes low as 130 °C or lower, whereby the heat resistance may possibly become low, and therefore, such is not preferable.

With respect to a molecular weight of the cyclic olefin based addition polymer according to the invention, when reduced into polystyrene, usually, the number average molecular weight is from 10,000 to 300,000 and the weight average molecular weight is from 20,000 to 700,000; preferably, the number average molecular weight is from 20,000 to 200,000 and the weight average molecular weight is from 50,000 to 500,000; and more preferably, the number average molecular weight is from 50,000 to 150,000 and the weight average molecular weight is from 100,000 to 300,000. When the number average molecular weight is less than 10,000 and the weight average molecular weight is less than 20,000, the film or sheet as formed may possibly become inferior in toughness and fragile. On the other hand, when the number average molecular weight exceeds 300,000 and the weight average molecular weight exceeds 700,000, the melt viscosity becomes high so that the workability of film formation by the solution casting method or the surface smoothness of the resulting film or sheet may possibly become worse.

Also, a glass transition temperature of the cyclic olefin based addition polymer according to the invention is from 100 to 450 °C, and preferably from 150 to 400 °C. When the glass transition temperature of the subject polymer is lower than 100 °C, when brought into contact with a superheated water vapor, deformation may possibly occur, and the crosslinking reaction and the removal of the residual solvent by the method according to the invention may possibly become difficult. On the other hand, when it exceeds 450 °C, the resulting film or sheet may possibly have no toughness and become fragile.

The cyclic olefin based addition polymer according to the invention is produced by using mainly the "specific

monomer (1)" and using the "specific monomer (2)" for the purpose of forming the crosslinking and optionally, further using the "specific α-olefin compound" or "specific conjugated diene compound" for the purpose of controlling the glass transition temperature.

The production process thereof will be hereunder described.

Examples of an addition type polymerization catalyst for forming the structural unit (a) or structural (c) include single complex catalysts and multiple component system catalysts of palladium, nickel, cobalt, titanium, zirconium, etc. as enumerated in the following [1], [2] and [3]. But, it should not be construed that the invention is limited thereto.

[1] Single complex catalysts ofPd, Ni, etc.:
Examples include:

$[Pd(CH_3CN)_4][BF_4]_2$, $[Pd(PhCN)_4][SbF_6]$,
$[(\eta^3$-crotyl)Pd(cycloocta, 5-diene)]$[PF_6]$,
$[(\eta^3$-crotyl)Ni(cycloocta, 5-diene)]$[B(3,5-(CF_3)_2C_6F_3)_4]$,
$[(\eta^3$-crotyl)Ni(cycloocta, 5-diene)]$[PF_6]$,
$[(\eta^3$-allyl)Ni(cycloocta, 5-diene)]$[B(C_6F_5)_4]$,
$[(\eta^3$-crotyl)Ni(cycloocta, 5-diene)]$[SbF_6]$,
Toluene $Ni(C_6F_5)_2$,
Benzene-$Ni(C_6F_5)_2$,
Mesitylene $Ni(C_6F_5)_2$, and
Ethylether-$Ni(C_6F_5)_2$.

[2] Multiple component system catalysts comprising a combination of a palladium complex containing a σ- or σ,π-bond and an organoaluminum or very superacid salt:
Examples include:

- A combination of di-μ-chloro-bis(6-methoxybicyclo[2.2.1]hept-2-ene-endo-5σ,2π)Pd with a compound selected from methyl alumoxane (abbreviated as "MAO"), $AgSbF_6$ and $AgBF_4$,
- A combination of $[(\eta^3$-allyl)$PdCl]_2$ with $AgSbF_6$ or $AgBF_4$, and
- A combination of $[(1,5$-COD)$Pd(CH_3)Cl]$ with $PPh_3$ and NaB $[3,5-(CF_3)_2C_6H_3]_4$.

[3] Multiple component system catalysts containing 1) a transition metal compound selected from a nickel compound, a palladium compound, a cobalt compound, a titanium compound, and a zirconium compound; 2) a compound selected from a superacid, a Lewis acid, and an ionic boron compound; or 3) an organoaluminum compound as enumerated below:

1) Transition metal compound:

1)-1 Nickel compound, palladium compound and cobalt compound:

- A compound selected from organic carboxylic acid salts, organic phosphorous acid salts, organic phosphoric acid salts, organic sulfonic acid salts, and β-diketone compounds of nickel, palladium or cobalt. Examples include nickel 2-ethylhexanoate, nickel naphthenate, cobalt naphthenate, nickel oleate, nickel dodecanoate, cobalt dodecanoate, cobalt neodecanoate, nickel dodecylbenzenesulfonate, bis(acetylacetonato)nickel, bis-(ethylacetoacetato)nickel, palladium 2-ethylhexanoate, palladium naphthenate, bis(acetylacetonato)palladium, and palladium dibutylphosphite.
- A compound resulting from modification of the foregoing organic carboxylic acid of nickel or palladium with a superacid such as hexafluoroantimonic acid, tetrafluoroboric acid, trifluoroacetic acid, and hexafluoroacetone.
- A diene or triene-coordinated complex of nickel.
  Examples include dichloro(1,5-cyclooctadiene)nickel, $[(\eta^3$-crotyl)(1,5-cyclooctadiene)nickel]hexafluorophosphate and its tetrafluoroborate, a tetrakis[3,5-bis-(trifluoromethyl)]borate complex, and nickel complexes such as (1,5,9-cyclododecatriene)nickel, bis(norbornadiene)nickel, and bis(1,5-cyclooctadiene)nickel.
- A complex resulting of coordination of an atom such as P, N, and O with nickel.

Examples include nickel complexes such as bis(triphenylphosphine)nickel dichloride, bis(triphenylphosphine)nickel dibromide, bis[N-(3-t-butylsalicylidene)-phenylaminato]nickel, Ni[PhC(O)CH](Ph),

$Ni(OC(C_6H_4)PPh)(H)(PCy_3)$, $Ni[OC(O)(C_6H_4)P](H)(PPh_3)$, a reaction product between bis(1,5-cyclooctadiene)nickel and $PhC(O)CH=PPh_3$, and $[2,6-(i-Pr)_2C_6H_3N=CHC_6H_3(O)(Anth)](Ph)(PPh_3)Ni$ (wherein Anth is an abbreviation of 9-anthracenyl; Ph is an abbreviation of phenyl; and Cy is an abbreviation of cyclohexyl).

1)-2 Titanium compound and zirconium compound:

Examples include $[t-BuNSiMe(Me_4Cp)]TiCl_2$, $(Me_4Cp)(O-iPr_2C_6H_3)_2TiCl$, $(Me_4Cp)TiCl_3$, $(Me_4Cp)Ti(OBu)_3$, $[t-BuNSiMeFlu]TiMe_2$, $[t-BuNSiMeFlu]TiCl_2$, $Et(Ind)_2ZrCl_2$, $Ph_2C(Ind)(Cp)ZrCl_2$, $iPr(Cp)(Flu)ZrCl_2$, $iPr(3-tert-But-Cp)(Ind)ZrCl_2$, $iPr(Cp)(Ind)ZrCl_2$, $Me_2Si(Ind)_2ZrCl_2$, and $Cp_2ZrCl_2$ [wherein Cp is an abbreviation of cyclopentadiene; Ind is an abbreviation of indenyl; and Flu is an abbreviation of fluorenyl].

2) Compound selected from a superacid, a Lewis acid, and an ionic boron compound:

Examples of the superacid include hexafluoroantimonic acid, hexafluorophosphoric acid, hexafluoroarsenic acid, trifluoroacetic acid, fluorosulfuric acid, trifluoromethanesuffonic acid, tetrafluoroboric acid, tetrakis(pentafluorophenyl)boric acid, tetrakis[3,5-bis(trifluoromethyl)phenyl]boric acid, p-toluenesulfonic acid, and pentafluoropropionic acid.

Examples of the Lewis acid include organic halides exhibiting Lewis acidity such as complexes of boron trifluoride with an ether, an amine, a phenol, etc., complexes of aluminum trifluoride with an ether, an amine, a phenol, etc., boron compounds, e.g., tris(pentafluorophenyl)borane and tris[3,5-bis(trifluoromethyl)phenyl]borane, aluminum compounds, e.g., aluminum trichloride, aluminum tribromide, ethylaluminum dichloride, ethylaluminum sesquichloride, diethylaluminum fluoride, and tri(pentafluorophenyl)aluminum, hexafluoroacetone, hexachloroacetone, chloranil, and hexafluoromethyl ethyl ketone; and besides, compounds exhibiting Lewis acidity such as titanium tetrachloride and pentafluoroantimony.

Examples of the ionic boron compound include triphenylcarbenium tetrakis(pentafluorophenyl)borate, triphenylcarbenium tetrakis[3,5-bis(trifluoromethyl)phenyl]borate, triphenylcarbenium tetrakis(2,4,6-trilfluorophenyl)-borate, triphenylcarbenium tetraphenylborate, tributylammonium tetrakis(pentafluorophenyl)borate, N,N-dimethylanilium tetrakis(pentafluorophenyl)borate, N,N-diethylanilium tetrakis(pentafluorophenyl)borate, N,N-diphenylanilium tetrakis(pentafluorophenyl)borate, lithium tetrakis(pentafluorophenyl)borate, and lithium tetrakis[3,5-bis(trifluoromethyl)phenyl]borate.

3) Organoaluminum compound:

For example, alkyl alumoxane compounds such as methyl alumoxane, ethyl alumoxane, and butyl aluomoxane; alkylaluminum compounds and halogenated alkylaluminum compounds such as trimethylaluminum, triethylaluminum, triisobutylaluminum, diisobutylaluminum hydride, diethylaluminum chloride, diethylaluminum fluoride, ethylaluminum sesquichloride, and ethylaluminum dichloride; and mixtures of the foregoing alkyl alumoxane compound and the foregoing alkylaluminum compound are suitably used.

The component of such a single complex catalyst or multiple component system catalyst is used in a use amount of the following range.

The transition metal compound such as nickel compounds, palladium compounds, cobalt compounds, titanium compounds, and zirconium compounds is used in an amount of from 0.02 to 100 atomic mmoles per mole of the monomer; the organoaluminum compound is used in an amount of from 1 to 5,000 moles per one atomic mole of the transition metal compound; and the superacid, Lewis acid or ionic boron compound is used in an amount of from 0 to 100 moles per one atomic mole of the transition metal compound.

The cyclic olefin based addition polymer according to the invention is obtained by carrying out the polymerization using a single complex catalyst or multiple component system catalyst composed of the foregoing component in a solvent composed of one or two or more members selected from alicyclic hydrocarbon solvents such as cyclohexane, cyclopentane, methylcyclopentane, methylcyclohexane, and ethylcyclohexane; aliphatic hydrocarbon solvents such as hexane, heptane, and octane; aromatic hydrocarbon solvents such as toluene, benzene, xylene, and mesitylene; and halogenated hydrocarbon solvents such as dichloromethane, 1,2-dichloroethane, 1,1-dichloroethane, tetrachloroethane, chlorobenzene, and dichlorobenzene at a temperature in the range of from -20 to 120 °C.

On the other hand, the hydrogenated cyclic olefin based ring-opening polymer according to the invention contains the structural unit (b) and is produced by ring-opening polymerization of the "specific monomer (1)" and subsequently hydrogenation.

Also, in the case where the foregoing cyclic olefin based ring-opening polymer contains the structural unit (b) and the structural unit (d), it is produced by ring-opening polymerization of the "specific monomer (1)" and the "specific monomer (2)" and subsequently hydrogenation.

A proportion of the structural unit (d) to be contained in the hydrogenated cyclic olefin based ring-opening polymer containing the structural unit (b) and the structural unit (d) according to the invention is from 0.5 to 30 % by

mole, preferably from 1 to 20 % by mole, and more preferably from 2 to 10 % by mole in the whole of structural units.

As the polymerization catalyst which is used in the ring-opening polymerization, 1) a single component system catalyst or 2) a multiple component system catalyst as enumerated below is useful.

1) Examples of the single component system catalyst include compounds such as
biscyclopentadienyl-3,3-dimethyltitanacyclobutane,
biscyclopentadienyl-3-t-butyltitanacyclobutane,
$W(OR^9)_2(=NAr)(=CH(C(CH_3)_2R^{10})$,
$Mo(OR^{11})_2(=NAr)(=CH(C(CH_3)_2R^{12})$,
$W(Br)_2(OCH_2(t\text{-}Bu))_2(=CH(t\text{-}Bu))$,
$W(CO)_4(=C(OMe)(CH_2CH_2CH=CH_2)$,
$RuCl_2[PPh_3]_2(=CHCO_2Et)$,
$RuCl_2[PCy_3]_2(=CHCH=CPh_2)$,
$RuCl_2[PCy_3]_2(=CHPh)$,
$Ta(OAr)_3(=CH(t\text{-}Bu))$, and
$Ta(SAr')_3(=CH(t\text{-}Bu))$.
[Here, $R^9$ to $R^{12}$ each represents a hydrocarbon group or a halogenated hydrocarbon group; and Ar and Ar' each represents an aromatic substituent.]

2) As the multiple component system catalyst, ones comprising a combination of (C-1) at least one member selected from tungsten, molybdenum, rhenium, titanium, and hafnium compounds and (C-2) at least one member selected from compounds of an element belonging to the Group IA, IIA, IIB, IIIA, IVA or IVB of the Periodic Table and containing a metal-carbon bond or a metal-hydrogen bond are suitably used, and if desired, (C-3) an additive (activity enhancer) may be additionally combined.

As the tungsten, molybdenum, rhenium, titanium and hafnium compounds which are suitable as the component (C-1), their halides, oxyhalides, alkoxides, phenoxides, carboxylic acid salts, β-diketone compounds, sulfonic acid salts, phosphoric acid salts, phosphorous acid salts, carbonyl complexes, acetonitrile complexes, cyclopentadienyl complexes, indenyl complexes, hydride complexes, and derivatives thereof, or combinations of two or more kinds thereof are used. Of these, the tungsten and molybdenum compounds, especially their alkoxides, phenoxides, halides, and oxyhalides are preferably used because they exhibit high polymerization activity.

Specific examples of the component (C-1) include $WCl_6$, $WCl_5$, $WCl_4$, $WBr_6$, $WBr_4$, $WOCl_4$, $WOBr_4$, $W(OC_6H_5)_6$, $WCl_4(OCH_2CH_2Cl)_2$, $WCl_2(OC_6H_5)_4$, $WOCl_2[OC_6H_3\text{-}2,6\text{-}(i\text{-}Pr)_2]_2$, $WO(OC_6H_3\text{-}2,6\text{-}Me_2)_4$, $MoCl_5$, $MoCl_3$, $Mo(OC_2H_5)_5$, $MoO_2(acac)_2$, $Mo(CO)_5(C_5H_5N)$, $WCl_6(C_5H_5N)$, $ReOCl_3$, $Re(CO)_5Cl$, $TiCl_4$, $HfCl_4$, $ZrCl_4$, $(\eta^5\text{-}C_5H_5)_2TiCl_2$, and $(\eta^5\text{-}C_9H_7)_2TiCl_2$. These compounds can be used singly or in combinations of two or more kinds thereof.

Specific examples of the component (C-2) which can be used include organolithium compounds such as methyllithium, ethyllithium, butyllithium, phenyllithium, and cyclopentadiethyllithium; organosodium compounds such as cyclopentadienylsodium; organomagnesium compounds such as dimethylmagnesium, diethylmagnesium, dibutylmagnesium, a halogenated ethylmagnesium, and a halogenated butylmagnesium; organoaluminum compounds such as a trialkylaluminum, a dialkylaluminum halide, an alkylaluminum dihalide, an alkylaluminum sesquihalide, a dialkylaluminum hydride, and an alkyl aluminoxane; organozinc compounds such as a dialkylzinc; organotin compounds such as a tetraalkyltin and tetraphenyltin; and metal hydrides such as lithium hydride, lithium aluminum hydride, sodium hydride, sodium borohydride, and aluminum hydride. The component (C-2) is preferably used in an amount in the range of from 1 to 100 times, and more preferably from 2 to 30 times based on the component (C-1) in terms of molar ratio as reduced into a metal atom.

The activity enhancer as the component (C-3) is optionally used for the purpose of further enhancing the activity of ring-opening polymerization. Specific examples thereof include water, oxygen, acetaldehyde, acetaldehyde diethyl acetal, ethylene oxide, epichlorohydrin, N-nitrosodimethylaniline, tetrabutylammonium chloride, N-nitrosodiphenylamine, and aluminum tribromide. Its addition amount is not particularly limited and varies depending upon the kind thereof. It is used in an amount in the range of from 0.005 to 10 times, and preferably from 0.01 to 2 times based on the component (C-1) in terms of molar ratio.

As the solvent of the ring-opening polymerization reaction, one or two or more members selected from aliphatic hydrocarbons such as pentane, normal hexane, normal heptane, butane, and 2-methylbutane; alicyclic hydrocarbons such as cyclohexane, cyclopentane, and methylcyclopentane; aromatic hydrocarbons such as toluene, benzene, xylene, and mesitylene; halogenated hydrocarbons such as dichloromethane, 1,2-dichloroethane, 1,2-dichloroethylene, chlorobenzene, and o-dichlorobenzene; and polar solvents such as ethyl acetate, butyl acetate, γ-butyrolactone, and nitromethane are used. Also, the use amount of the solvent is desirably in the range of from 1 to 20 times by weight based on the monomer.

With respect to the method of ring-opening polymerization, the solvent, the monomer component comprising

the "specific monomer (1)" and the "specific monomer (2)", and optionally a molecular weight modifier selected from α-olefins such as ethylene, propylene, 1-butene, 1-hexene, and 1-octene, vinyl ether, thiovinyl ether, and vinyl acetate are charged in a reactor under a nitrogen or argon atmosphere, and the polymerization system is set up at a temperature in the range of from -20 °C to 100 °C. Next, the foregoing catalyst component is added, and polymerization is carried out at a temperature in the range of from -20 °C to 120 °C.

It is preferable that the addition amount of the catalyst component falls within the range of from 100 to 100,000 moles in total of the monomer components per one atomic gram of the transition metal atom. These polymerization operations can be carried out batchwise or continuously.

Furthermore, it is also possible to obtain a polymer having an inclined or block-like composition distribution by a method in which either one of the "specific monomer (1)" or the "specific monomer (2)" is first polymerized, and the other is then introduced stepwise or continuously in the reactor during the polymerization operations.

Termination of the polymerization is carried out by a compound selected from water, alcohols, organic acids, carbon dioxide gas, aldehyde compounds, and ketone compounds. If desired, separation and removal of the polymerization catalyst residue from the polymerization reaction mixture may be carried out, and a known method may be properly employed. For example, there is enumerated a method in which an inorganic acid such as hydrochloric acid, nitric acid, and sulfuric acid or an organic acid such as maleic acid and fumaric acid is added to the polymerization reaction mixture, followed by washing with water or an alcohol solution. Also, the catalyst residue can be removed by adsorption using an adsorbing agent such as diatomaceous earth, alumina, silica, and active carbon or a filtration operation by a filter, etc. The polymer is obtained by coagulating the polymer solution with an alcohol selected from methanol, ethanol, and isopropanol or other bad solvent, followed by drying in vacuo and/or under heating. In this step, the unreacted monomers remaining in the polymer solution are removed.

In the hydrogenation reaction for the purpose of hydrogenating the olefinically unsaturated bond in the molecule, the ring-opening polymer solution after the polymerization may be used as it is, or a solution of the polymer from which the catalyst residue and the residual monomers have been removed may be used.

The hydrogenation reaction is carried out under a hydrogen pressure in the range of from 1.0 to 15 MPa at a temperature in the range of from 50 to 200 °C. As the hydrogenation catalyst, there are suitably used heterogeneous catalysts resulting from supporting a metal selected from palladium, platinum, platinum, rhodium, iridium, ruthenium, and nickel on a carrier selected from heterogeneous silica, alumina, zeolite, diatomaceous earth, magnesia, carbon, and calcium carbonate; and homogeneous catalysts such as nickel octanoate/triethylaluminum, nickel naphthenate/triethylaluminum, cobalt octanoate/triethylaminum, cobalt octanoate/n-butyllithium, biscyclopentadiethyltitanium dichloride/diethylaluminum chloride, palladium acetate/triethylaluminum, tris(triphenylphosphine)chlororhodium, tris(triphenylphosphine)hydrido·carbonyl·chloro·ruthenium, tris(tritolylphosphine)hydrido·carbonyl·chloro·ruthenium, tris(trixylylphosphine)hydrido·carbonyl·chloro·ruthenium, tris(tricyclohexylphosphine)hydrido·carbonyl·chloro·ruthenium, tris(triphenylphosphine)dihydro·carbonyl·ruthenium, and bis(triphenylphosphine)dichlororuthenium.

The hydrogenation catalyst is usually used in an amount in the range of from 10 to 1,000 ppm as reduced into the transition metal atom based on the ring-opening polymer.

When a rate of hydrogenation of the olefinically unsaturated bond in the molecule increases, the hydrogenated ring-opening polymer has excellent heat stability. As a result, in a desolvation step, a pelletization step, a molding processing step of product, and the like, it is possible to reduce heat deterioration by heating and deterioration by oxygen.

The rate of hydrogenation is usually 95 % or more, preferably 99 % or more, and more preferably 99.5 % or more. When the rate of hydrogenation is less than 95 %, the resistance to heat deterioration may possibly become insufficient.

Incidentally, the "hydrogenation" as referred to in the invention is hydrogenation against the olefinically unsaturated bond in the molecule, and when an aromatic group is present in the molecule, hydrogenation of such an aromatic group is not included. What such an aromatic group remains without being hydrogenated may possibly be advantageous in view of optical characteristics and heat resistance.

The range of the molecular weight of the hydrogenated cyclic olefin based ring-opening polymer according to the invention is identical with that of the cyclic olefin based addition polymer. Also, its glass transition temperature is from 100 to 300 °C, and preferably from 150 to 250 °C. When the glass transition temperature of the subject polymer is lower than 100 °C, when brought into contact with a superheated water vapor, deformation may possibly occur, whereby the crosslinking reaction and removal of the residual solvent according to the method of the invention may possibly become difficult. On the other hand, when it exceeds 300 °C, the resulting film or sheet may possibly have no toughness and become fragile.

On the other hand, examples of the aromatic polymer which can be used in the invention include aromatic polyimides, aromatic polyamides, aromatic polyesters, aromatic polyethers, aromatic polyetherketones, aromatic polyetheresters, aromatic polysulfones, and polyphenylenes.

These aromatic polymers may have a sulfonic group, etc.

In the invention, the film or sheet for bringing into contact with a gas composition containing a superheated

water vapor is produced by a known method such as a melt extrusion method, an inflation method, and a solution casting method. Above all, one as produced by a solution casting method is preferable because the resulting film or sheet is excellent in surface properties and little in optical strain.

As general steps of the solution casting method, there can be exemplified a series of steps in which an organic polymer solution composition containing an organic polymer and a solvent, and optionally an additive or a blending agent such as antioxidants and leveling agents is first prepared (this composition will be hereinafter referred to as "casting composition"); thereafter, the casting composition is cast on a support such as a metal belt, a metal drum, and a plastic film and then dried; thereafter, the support is separated off; and if desired, drying is further carried out. However, it should not be construed that the invention is limited to this example. Incidentally, the casting method of the casting composition (coating method for film formation) is not particularly limited, and known methods such as coating using a brush or brush, spraying, a screen printing method, a flow coating method, a method for coating using a coater such as a die coater, a spin coating method, and a dipping method can be applied.

In the invention, a solvent which is used for the purpose of producing a film or sheet of an organic polymer by the solution casting method is not particularly limited so far as the subject organic polymer is dissolved therein to form a uniform phase (hereinafter, this solvent will be often referred to as "good solvent"). Solvents which can uniformly dissolve the organic polymer therein even in a concentration of solids of from 10 to 30 % by weight at 25 °C are preferable.

Though a solvent having a low boiling point is readily dried during forming a film or sheet, volatilization of the solvent is too fast so that unevenness of the surface is likely generated. On the other hand, though a solvent having a high boiling point is hardly dried, unevenness of the surface of the film or sheet is hardly generated. For that reason, a mixed solvent composed of two or more kinds of solvents having a different boiling point may be used.

Furthermore, a solvent which does not dissolve the subject organic polymer therein within the range where the subject organic polymer is not deposited (hereinafter, this solvent will be often referred to as "bad solvent") may be added to the good solvent.

The "good solvent" or "bad solvent" of the subject polymer varies depending upon the kind of a structural unit, especially the structural unit (a).

Examples of the foregoing good/bad solvent include alicyclic hydrocarbons such as cyclopentane, cyclopentene, methylcyclopentane, cyclohexane, cyclohexene, methylcyclohexene, dimethylcyclohexene, and ethylcyclohexene; aromatic hydrocarbons such as benzene, toluene, xylene, ethylbenzene, and chlorobenzene; halogenated aliphatic hydrocarbons such as dichloromethane and 1,2-dichloroethane; aliphatic hydrocarbons such as hexane, heptane, and octane; cyclic ethers such as tetrahydrofuran, 2-methoxytetrahydrofuran, 2-methyltetrahydrofuran, and dioxane; ketones such as acetone and methyl ethyl ketone; alcohols such as ethanol, isopropyl alcohol, and butanol; and esters such as methyl acetate and ethyl acetate. These solvents are used as a good solvent or a bad solvent depending upon solubility of the organic polymer according to the invention.

A concentration of the organic polymer in the casting composition according to the invention is from 5 to 60 % by weight, preferably from 10 to 40 % by weight, and more preferably from 15 to 30 % by weight. When the concentration of the subject polymer is too thin, adjustment of the thickness of the film or sheet is difficult, while when it is too thick, the viscosity is high so that the workability of film formation by the solution casting method or the surface properties of the resulting film or sheet may possibly become worse.

If desired, the composition of the organic polymer in the invention can be blended with other resin, a phenol based or phosphorus based antioxidant, an ultraviolet inhibitor, an oxide of Si, Ti, Al, Zr, etc., an alkoxide compound, a stratiform clay mineral such as montmorillonite, saponite, and hectorite, and the like. Also, for the purpose of making the surface roughness of the coated layer small, a fluorine based nonionic surfactant, a special acrylic resin based leveling agent, a silicone based leveling agent, and the like can be used. The addition amount of such a leveling agent is preferably one at which its compatibility with the solvent is good, and the addition amount in the casting composition falls within the range of from 1 to 50,000 rpm.

In general, as a method for drying a film or sheet, there is employed a method for increasing the drying temperature from a low temperature of 20 to 50 °C to a high temperature of 50 to 150 °C in a multiple stage manner. However, according to this method, it takes a long period of time to reduce the amount of the residual solvent to not more than 1 % by weight so that the film or sheet may possibly become deteriorated.

In the invention, after separating off the film or sheet having been subjected to primary drying from the support, by bringing the resulting film or sheet into contact with a superheated water vapor-containing gas, it is possible to reduce the amount of the residual solvent to not more than 5 % by weight, preferably not more than 1 % by weight, and more preferably not more than 0.1% by weight. By reducing the amount of the residual solvent in the film or sheet to not more than 1 % by weight, it is also possible to omit a secondary drying step of the film or sheet.

The thus obtained film or sheet has a film thickness of from 1 to 1,000 μm, and preferably from 10 to 250 μm. When the film thickness is less than 1 μm, the strength is so low that the film or sheet cannot endure the practical use. On the other hand, when it exceeds 1,000 μm, the removal of the residual solvent may possibly become difficult.

In the invention, when a hydrolyzable silyl group is contained in the organic polymer, the hydrolyzable silyl

group is decomposed to form a siloxane bond, thereby causing intermolecular or intramolecular crosslinking. Accordingly, an organic polymer based film or sheet having excellent chemical resistance and dimensional stability and having a low linear expansion coefficient is obtained.

A specific method for the treatment will be exemplified below.

In the invention, when a hydrolyzable silyl group is contained in the organic polymer, for the purposes of rapidly advancing a reaction for decomposing the hydrolyzable silyl group to form a siloxane bond and obtaining a firm crosslinking structure, it is preferred to use an acid or a compound capable of generating an acid at the treatment temperature simultaneously. Specific examples of such a compound include compounds of the following groups a), b), c) and d). However, it should not be construed that the invention is limited thereto.

a) An inorganic acid such as hydrochloric acid and phosphoric acid, or an organic acid such as acetic acid, oxalic acid, and p-toluenesulfonic acid.

b) A compound which is a phosphorous acid ester such as trialkyl phosphites, triaryl phosphites, dialkyl phosphites, monoalkyl phosphites, and hydrophosphorous acid esters and which is hydrolyzed upon heating at from 50 to 300 °C in the presence of a water vapor, to generate an acid.

c) A compound which is hydrolyzed upon heating at from 50 to 300 °C in the presence of a water vapor, to generate an acid, such as esters of an organic carboxylic acid with a secondary or tertiary alcohol, hemiacetal esters of an organic carboxylic acid, trialkylsilyl esters of an organic carboxylic acid, and alkyl, cycloalkyl or aryl esters of p-toluenesulfonic acid.

The compounds of the groups a), b) and c) are previously blended in the casting composition and then contained in the film or sheet.

Incidentally, in the case where such a compound is previously blended in the casting composition, when the acid of the group a) is used, a crosslinking reaction proceeds in the casting composition so that gelation may possibly occur. Accordingly, it is preferred to use the compound of the group b) or c). The compound of the group b) is especially preferable because it is effective by a small amount.

The compounds of these group a), b) and c) may be used singly or in combinations of two or more kinds thereof.

When the compound of the foregoing group b) or c) is contained in the film or sheet, it is blended in an amount in the range of from 0.0001 to 5.0 parts by weight, and preferably from 0.001 to 2.0 parts by weight based on 100 parts by weight of the organic polymer according to the invention in the casting composition.

In view of a crosslinking reaction rate and a crosslinking structure, it is also effective to blend a compound selected from metal oxides of tin, aluminum, zinc, titanium, antimony, etc., alkoxide compounds, phenoxide compounds, β-diketone compounds, alkyl compounds, halides, organic acid salt compounds, phosphoric acid salt compounds, and phosphorous acid salt compounds, thereby containing it in the casting composition. However, when such a compound is blended in the casting composition, a crosslinking reaction proceeds in the casting composition so that gelation may possibly occur. Accordingly, it is essential to control a pot life of the casting composition.

Also, by bringing a film or sheet containing a residual solvent as obtained by a method other than the casting method, for example, a melt extrusion method into contact with a gas composition containing a superheated water vapor, the residual solvent can be removed, and a crosslinked body can be formed as the need arises. In particular, this is an effective treatment method for a film or sheet of an organic polymer having a glass transition temperature of 150 °C or higher.

In the invention, though a measure for obtaining a gas (composition) containing a superheated water vapor of from 100 to 300 °C is not particularly limited, when the operation pressure is high or the degree of vacuum is high, the facilities become large, resulting in a problem from the standpoint of costs. Accordingly, it is preferred to heat the gas composition at from 100 to 300 °C under a pressure in the range of from 0.001 to 0.5 MPa, and preferably from 0.05 to 0.2 MPa. When the temperature of the gas containing a superheated water vapor is lower than 100 °C, the temperature is too low so that a removal efficiency of the residual solvent is poor. On the other hand, when it exceeds 300 °C, the film or sheet may possibly cause heat deterioration. Furthermore, when the pressure of the gas containing a superheated water vapor is less than 0.001 MPa or exceeds 0.5 MPa, the treatment facilities become expensive, and therefore, such is not preferable. The subject gas temperature is preferably from 100 to 300 °C, and more preferably from 110 to 250 °C; and the pressure is preferably from 0.01 to 0.5 MPa, and more preferably from 0.05 to 0.2 MPa. Moreover, a proportion of the amount of the superheated water vapor in the gas containing a superheated water vapor is 10 % by mole or more, preferably 30 % by mole or more, and more preferably 50 % by mole or more.

A gas other than the superheated water vapor is not particularly limited so far as it does not hinder the characteristics of the film or sheet, but gases which are less dangerous, such as nitrogen and argon, are preferable. Also, for the purpose of reducing the residual solvent, it is possible to add a gas having compatibility with the residual solvent in an amount of not more than 10 % by mole.

The gas having compatibility with the residual solvent varies depending upon the solvent to be used, and

examples thereof include vapors of the following compounds.

a) An alcohol such as methanol, ethanol, and propyl alcohol.
b) A ketone such as acetone.
c) An ether such as methyl ether, ethyl ether, and dimethyl ether.
d) A halogenated hydrocarbon such as methylene chloride.

In the invention, though the temperature of the gas composition to be contacted for the treatment of the film or sheet is usually from 100 to 300 °C, and preferably from 110 to 250 °C, it is preferably identical with or lower than the glass transition temperature (Tg) of the organic polymer to be contained in the film or sheet before the treatment. When the gas composition is contacted at a temperature higher than the glass transition temperature (Tg) of the organic polymer to be containing in the film or sheet before the treatment, deformation of the film or sheet may possibly occur, or the surface properties may possibly become worse.

A method for bringing the film or sheet into contact with the foregoing high-temperature gas composition is not particularly limited, and the film or sheet is passed through in a space having the foregoing high-temperature gas composition filled therein. Also, the contact time varies depending upon the additives to be contained in the film or sheet before the treatment, the amount of the residual solvent, and the treatment temperature and is usually from 0.5 minutes to 10 hours. Furthermore, such contact may be carried out batchwise or continuously.

In the invention, after the contact treatment with the foregoing high-temperature gas composition, the treated film or sheet may be washed and dried. In washing, in many cases, purified water, a refined alcohol having from 1 to 3 carbon atoms, such as methanol and ethanol, or a mixed solvent thereof is generally used, but it should not be construed that the invention is limited thereto.

## EXAMPLES

The invention will be more specifically described below with reference to the following Examples, but it should be construed that the invention is never limited to these Examples in any way.

Incidentally, in the Examples, all parts and percentages are on a weight basis unless otherwise indicated.

Also, the molecular weight of the cyclic olefin based polymer, the glass transition temperature, the amount of residual solvent, the degree of swelling, and the linear expansion coefficient were measured by the following methods.

### (1) Molecular weight

A molecular weight was measured at 120 °C by using o-dichlorobenzene as a solvent and using an H type column manufactured by Tosoh Corporation in a 150C Model gel permeation chromatographic (GPC) device manufactured by Waters Corporation. The resulting molecular weight is a value as reduced into standard polystyrene.

### (2) Glass transition temperature

A glass transition temperature was measured in terms of a peak temperature of temperature dispersion of Tan δ (a ratio of loss elastic modulus E" to storage elastic modulus E', Tan δ = E"/E') as measured in terms of dynamic viscoelasticity.

In measuring the dynamic viscoelasticity, a peak temperature of Tan δ was measured by using a Rheovibron DDV-01FP (manufactured by Orientec Corp.) in which the measurement frequency was 10 Hz, the temperature-rise rate was 4 °C/min, the excitation mode was a single waveform, and the excitation width was 2.5 μm.

### (3) Analysis of amount of residual solvent

In the case of measuring the amount of a residual solvent other than toluene, 1 g of a film was dissolved or swollen in 20 ml of toluene to extract the residual solvent in the film, and Poraplot Q (manufactured by Hewlett Packard) as a column was installed in a gas chromatographic device HP-5890 (manufactured by Hewlett Packard), thereby measuring an amount of the residual solvent. Also, in the case of measuring the amount of residual toluene in a film, 1 g of a film was dissolved or swollen in 20 ml of cyclohexane, and an amount of the residual toluene was measured and quantitatively determined in the same measure as described previously. In the case of measuring the amount of residual toluene, 1 g of a film was dissolved or swollen in 20 ml of acetone to extract the residual toluene in the film, and an amount of the residual toluene in the film was measured by using the same device.

(4) Degree of swelling

A film of 4 cm (M) x 4 cm (T) was dipped in a solvent in which the film before crosslinking is soluble at 25 °C for 3 hours, a weight of the film before and after dipping was measured, and a degree of swelling was then determined according to the following expression.

$$[\text{Degree of swelling (\%)}] = [(\text{Weight after dipping})/(\text{Weight before dipping})] \times 100$$

(5) Measurement of linear expansion coefficient

Using TMA (Thermal Mechanical Analysis) SS6100 (manufactured by Seiko Instruments Inc.), a film piece having a test shape of 10 mm (M) x 10 mm (T) x 150 μm (W) was made to stand upright and fixed, to which was then applied a load having a weight of one gram by a probe.

In order to eliminate the heat history of the film, the temperature was once raised at 5 °C/min from room temperature to 200 °C, and thereafter, the temperature was again raised at 5 °C/min from room temperature. A linear expansion coefficient was determined from an inclination of elongation of the film piece at from 50 °C to 150 °C.

Reference Example 1 (preparation of untreated film A)

A 2,000 ml reactor was charged with 750 mmoles (70.5 g) of bicyclo[2.2.1]-hept-2-ene, 475 mmoles (63.6 g) of tricyclo[5.2.1.$0^{2,6}$]dec-8-ene having an endo content of 95 %, and 25 mmoles (6.4 g) of 5-triethoxysilyl-bicyclo[2.2.1]hept-2-ene as monomers, 562 g of cyclohexane and 141 g of methylene chloride as solvents, and 15.0 mmoles of styrene as a molecular weight modifier under nitrogen. A hexafluoroantimonic acid modified product of nickel octanoate as prepared in advance by reacting nickel octanoate in a hexane solution with hexafluoroantimonic acid at a molar ratio of 1/1 at -10 °C, removing precipitated $Ni(SbF_6)_2$ as a by-product and then diluting with a toluene solution in an amount of 0.25 mmoles as an Ni atom, 2.50 mmoles of triethylaluiminum, and 0.75 mmoles of boron trifluoride ethyl etherate were charged, followed by carrying out polymerization. The polymerization was carried out at 15 °C for 3 hours, and the polymerization was then terminated by methanol. A conversion of the monomers to the polymer was 85 %.

To the polymer solution, 660 ml of water and 47.5 mmoles of lactic acid were added, and the mixture was stirred and mixed to react with the catalyst components, followed by stationary separation of the polymer solution and water. The polymer solution from which an aqueous phase containing a reaction product of the catalyst components had been removed was added in 3 liters of isopropyl alcohol to coagulate the polymer, and the urireacted monomers and the catalyst residue were removed. The coagulated polymer was dried, thereby obtaining a polymer A.

From the gas chromatographic analysis of the unreacted monomers in the polymer solution, a proportion of a structural unit derived from tricyclo[5.2.1.-$0^{2,6}$]dec-8-ene in the polymer A was 35 % by mole. A proportion of a structural unit derived from 5-triethoxysilyl-bicyclo[2.2.1]hept-2-ene was 2.0 % by mole. The polymer A had a number average molecular weight (Mn) of 142,000 and a weight average molecular weight (Mw) of 284,000 as reduced into polystyrene, with Mw/Mn being 2.0. Also, the polymer A had a glass transition temperature of 390 °C.

10 g of the polymer A was dissolved in a mixed solvent of 10 ml of methylcycloxane and 40 ml of toluene, to which were then added 0.6 parts, based on 100 parts of the polymer, of each of pentaerythrityl-tetrakis[3-(3,5-di-t-butyl-4-hydroxyphenyl)propionate] and tris(2,4-di-t-butylphenyl) phosphite as antioxidants and 0.05 parts, based on 100 parts of the polymer, of tributyl phosphite.

This polymer solution was filtered by a membrane filter having a pore size of 10 μm to remove foreign matters, and then cast on a polyester film at 25 °C. The temperature of the atmosphere was gradually raised to 80 °C, and the solvent was evaporated off, followed by separating off the film. There was thus obtained an untreated film A having an amount of the residual solvent of 10 % in the film and a film thickness of 100 μm.

Reference Example 2 (Preparation of untreated film B)

A polymer B was obtained by carrying out polymerization in the same manner as in Reference Example 1, except for using 750 mmoles (70.5 g) ofbicyclo[2.2.1]-hept-2-ene, 450 mmoles (60.3 g) of tricyclo[5.2.1.$0^{2,6}$]dec-8-ene having an endo content of 95 %, and 50 mmoles (12.8 g) of 5-triethoxysilyl-bicyclo[2.2.1]hept-2-ene as monomers. A conversion of the monomers to the polymer was 83 %.

From the gas chromatographic analysis of the unreacted monomers in the polymer solution, a proportion of a structural unit derived from tricyclo[5.2.1.-$0^{2,6}$]dec-8-ene in the polymer B was 33 % by mole. A proportion of a structural unit derived from 5-triethoxysilyl-bicyclo[2.2.1]hept-2-ene was 3.9 % by mole. The polymer B had a number average

molecular weight (Mn) of 135,000 and a weight average molecular weight (Mw) of 271,000 as reduced into polystyrene, with Mw/Mn being 2.0. Also, the polymer B had a glass transition temperature of 389 °C.

An untreated film B having an amount of the residual solvent of 12 % in the film and a film thickness of 110 μm was obtained in the same manner as in the untreated film A, except for dissolving 10 g of the polymer B in 50 ml of p-xylene.

Reference Example 3 (Preparation of unreacted film C)

A 300-mL glass made pressure bottle was charged with 80 ml of toluene as a solvent, 165 mmoles of 8-methyl-8-methoxycarbonyl-tetracyclo[4.4.0.$1^{2,5}$ .$1^{7,10}$]dodec-3-ene and 5 mmoles of 5-triethoxysilyl-bicyclo[2.2.1]hept-2-ene, and 42.5 mmoles of 1-hexene as a molecular weight modifier under a nitrogen atmosphere. Furthermore, 0.119 mmoles of triethylaluminum and 0.017 mmoles of a methanol modified product of tungsten hexachloride [methanol/tungsten = 3 (mole/mole)] as catalyst components were successively added. Polymerization was carried out at 80 °C for 2 hours, and the polymerization was then terminated by methanol. A conversion of the monomers to the polymer was 97 %. To the polymerization reaction solution, 600 ml of water and 47.5 mmoles of lactic acid were added, and the mixture was stirred and then subjected to stationary separation. An aqueous phase containing a reaction product of the catalyst components was removed, and the polymerization reaction solution was added in 3 L of isopropanol to coagulate the ring-opening polymer, thereby removing the unreacted monomers. The coagulated polymer was dried in vacuo at 50 °C for 15 hours, thereby obtaining a ring-opening polymer C.

From a 270 MHz $^1$H-NMR spectrum of the ring-opening polymer C in benzene-$d_6$, the content of a structural unit derived from 8-methyl-8-methoxycarbonyl-tetracyclo[4.4.0.$1^{2,5}$.$1^{7,10}$]dodec-3-ene was quantitatively determined as 98 % by mole (as calculated from a ratio between the absorption based on a methoxycarbonyl group at 3.2 to 3.6 ppm and the absorption based on hydrogen adjacent to the double bond at 5.4 to 5.8 ppm). A proportion of a structural unit derived from 5-triethoxysilyl-bicyclo[2.2.1]hept-2-ene was 2.0 % by mole.

In a 500-mL stainless steel-made pressure reactor, a solution of 15 g of the above-obtained ring-opening polymer C dissolved in 200 g of toluene and carbonylchlorohydridotris(triphenylphosphine)ruthenium [$RuHCl(CO)(PPh_3)_3$] in an amount 70 ppm as reduced into a ruthenium atom were added, and the mixture was subjected to hydrogenation reaction at 140 °C for 4 hours under a hydrogen pressure of 10 MPa. A solution of the resulting hydrogenated ring-opening polymer was subjected to catalyst removal with a lactic acid aqueous solution and coagulated with isopropyl alcohol, thereby obtaining a hydrogenated ring-opening polymer CH.

A degree of hydrogenation as determined from the $^1$H-NMR measurement was 99.7 %. (The degree of hydrogenation was calculated from a relative ratio between the absorption based on a methoxycarbonyl group at 3.2 to 3.6 ppm and the absorption based on hydrogen adjacent to the double bond in the remaining ring-opening polymer without being hydrogenated at 5.4 to 5.8 ppm.) A proportion of a structural unit derived from 5-triethoxysilyl-bicyclo[2.2.1]hept-2-ene was 2.0 % by mole. The ring-opening polymer CH had a number average molecular weight (Mn) of 19,000 and a weight average molecular weight (Mw) of 75,000 as reduced into polystyrene, with Mw/Mn being 3.7. Also, its glass transition temperature was 168 °C.

10 g of the hydrogenated ring-opening polymer CH was dissolved in 35.5 g of toluene, to which were added 0.5 parts, based on 100 parts of the polymer, of respective pentaerythrityl-tetrakis[3-(3,5-di-t-butyl-4-hydroxyphenyl)propionate] and tris(2,4-di-t-butylphenyl) phosphite as antioxidants. Furthermore, 0.05 parts of tributyl phosphite was added to 100 parts of the polymer. This polymer solution was cast, thereby preparing a film C having an amount of the residual solvent of 13 % in the film and a film thickness of 100 μm.

Reference Example 4 (preparation of untreated film D)

A 2,000 ml reactor was charged with 750 mmoles (70.5 g) of bicyclo [2.2.1]hept-2-ene and 500 mmoles (66.9 g) of tricyclo[5.2.1.$0^{2,6}$]dec-8-ene having an endo content of 95 % as monomers, 562 g of cyclohexane and 141 g of methylene chloride as solvents, and 15.0 mmoles of styrene as a molecular weight modifier under nitrogen. A hexafluoroantimonic acid modified product of nickel octanoate as prepared in advance by reacting nickel octanoate in a hexane solution with hexafluoroantimonic acid at a molar ratio of 1/1 at -10 °C, removing precipitated $Ni(SbF_6)_2$ as a by-product and then diluting with a toluene solution in an amount of 0.25 mmoles as an Ni atom, 2.50 mmoles of triethylaluiminum, and 0.75 mmoles of boron trifluoride ethyl etherate were charged, followed by carrying out polymerization. The polymerization was carried out at 15 °C for 3 hours, and the polymerization was then terminated by methanol. A conversion of the monomers to the polymer was 85 %.

To the polymer solution, 660 ml of water and 47.5 mmoles of lactic acid were added, and the mixture was stirred and mixed to react with the catalyst components, followed by stationary separation of the polymer solution and water. The polymer solution from which an aqueous phase containing a reaction product of the catalyst components had been removed was added in 3 liters of isopropyl alcohol to coagulate the polymer, and the unreacted monomers and the catalyst residue were removed. The coagulated polymer was dried, thereby obtaining a polymer D.

From the gas chromatographic analysis of the unreacted monomers in the polymer solution, a proportion of a structural unit derived from tricyclo[5.2.1.-$0^{2,6}$]dec-8-ene in the polymer D was 37 % by mole. The polymer D had a number average molecular weight (Mn) of 153,000 and a weight average molecular weight (Mw) of 302,000 as reduced into polystyrene, with Mw/Mn being 2.0. Also, the polymer D had a glass transition temperature of 3 98 °C.
10 g of the polymer D was dissolved in a mixed solvent of 10 ml of methylcycloxane and 40 ml of toluene, to which were then added 0.6 parts, based on 100 parts of the polymer, of respective pentaerythrityl-tetrakis[3-(3,5-di-t-butyl-4-hydroxyphenyl)propionate] and tris(2,4-di-t-butylphenyl) phosphite as antioxidants.
This polymer solution was filtered by a membrane filter having a pore size of 10 μm to remove foreign matters, and then cast on a polyester film at 25 °C. The temperature of the atmosphere was gradually raised to 80 °C, and the solvent was evaporated off, followed by separating off the film. There was thus obtained an untreated film D having an amount of the residual solvent of 11% in the film and a film thickness of 100 μm.

Reference Example 5

(Synthesis of polymer)

A copolymer (number average molecular weight: 50,000) as obtained from a 4-chlorobenzoyl-terminated oligomer (number average molecular weight 11,200) which was obtained from 2,5-dichloro-4'-(4-phenoxyphenoxybenzophenone), 4,4-dichlorobenzophenone, and 2,2-bis(4-hydroxyphenyl)-1,1,1,3,3,3-hexafluoropropane was sulfonated, thereby obtaining a sulfonated polymer having a sulfonic acid equivalent of 2.08 meq./g.

(Casting to primary drying)

This sulfonated polymer was dissolved in a mixed solvent consisting of NMP and methanol (weight ration: 1/1) to prepare a 15 % solution of the subject sulfonated polymer. This was cast on a PET film and dried in an oven at 150 °C for one hour, thereby obtaining an untreated film E having a thickness of 40 μm. At this time, the amount of NMP in the film was 14 %.

Reference Example 6

A sulfonated polymer as synthesized in the same manner as in Reference Example 5 was dissolved in a mixed solvent consisting of γ-butyrolactone and propylene glycol monomethyl ether (weight ratio: 6/4) to prepare a 15 wt% solution of the subject sulfonated polymer. This was cast on a PET film and dried in an oven at 120 °C for one hour, thereby obtaining an untreated film F having a thickness of 40 μm. At this time, the amount of γ-butyrolactone in the film was 8.7 %.

Example 1

The untreated film A of 5 cm (M) x 3 cm (T) was charged in a stainless steel-made autoclave, and the autoclave was purged with nitrogen. Thereafter, drying and crosslinking reaction were carried out for 15 minutes while keeping an internal temperature at 150 °C using a superheated water vapor at 150 °C under an atmospheric pressure. The evaluation results of a film A-1 having been subjected to this treatment are shown in Table 1.

Example 2

A treated film A-2 was obtained in the same manner as in Example 1, except that in Example 1, the treatment time with a superheated water vapor was changed to 60 minutes. The evaluation results of the film A-2 are shown in Table 1.

Example 3

A treated film A-3 was obtained in the same manner as in Example 1, except that in Example 1, the temperature of a superheated water vapor was changed to 200 °C. The evaluation results of the film A-3 are shown in Table 1.

Example 4

A treated film A-4 was obtained in the same manner as in Example 1, except that in Example 1, the temperature of a superheated water vapor was changed to 200 °C and that the treatment time was changed to 60 °C. The evaluation

results of the film A-4 are shown in Table 1.

Comparative Example 1

The untreated film A of 5 cm (M) x 3 cm (T) was charged in a stainless steel-made autoclave, and the autoclave was purged with nitrogen. Thereafter, crosslinking reaction was carried out for 60 minutes while keeping an internal temperature at 150 °C using a saturated water vapor at 150 °C at 0.48 Pa. The thus treated film was dried in vacuo at 100 °C for 2 hours, thereby obtaining a treated film A-5. The evaluation results of the film A-5 are shown in Table 1.

Example 5

The untreated film B of 5 cm (M) x 3 cm (T) was charged in a stainless steel-made autoclave, and the autoclave was purged with nitrogen. Thereafter, drying was carried out for 60 minutes while keeping an internal temperature at 200 °C using a superheated water vapor at 200 °C under an atmospheric pressure. The evaluation results of a film B-1 having been subjected to this treatment are shown in Table 1.

Comparative Example 2

The untreated film B of 5 cm (M) x 3 cm (T) was charged in a following air-dryer, and drying was carried out for 60 minutes while keeping at 200 °C by dry air. The thus treated film was dried in vacuo at 100 °C for 2 hours, thereby obtaining a treated film B-2. The evaluation results of the film B-2 are shown in Table 1.

Example 6

The untreated film C of 5 cm (M) x 3 cm (T) was charged in a stainless steel-made autoclave, and the autoclave was purged with nitrogen. Thereafter, drying was carried out for 60 minutes while keeping an internal temperature at 150 °C using a superheated water vapor at 150 °C under an atmospheric pressure. The evaluation results of a film C-1 having been subjected to this treatment are shown in Table 1.

Comparative Example 3

The untreated film C of 5 cm (M) x 3 cm (T) was charged in a following air-dryer, and drying was carried out for 60 minutes while keeping at 150 °C by dry air. The thus treated film was dried in vacuo at 100 °C for 2 hours, thereby obtaining a treated film C-2. The evaluation results of the film C-2 are shown in Table 1.

Example 7

The untreated film D of 5 cm (M) x 3 cm (T) was charged in a stainless steel-made autoclave, and the autoclave was purged with nitrogen. Thereafter, drying was carried out for 60 minutes while keeping an internal temperature at 200 °C using a superheated water vapor at 200 °C under an atmospheric pressure. The evaluation results of a film D-1 having been subjected to this treatment are shown in Table 1.

Comparative Example 4

The untreated film D of 5 cm (M) x 3 cm (T) was charged in a following air-dryer, and drying was carried out for 60 minutes while constantly keeping at 200 °C by dry air. The thus treated film was dried in vacuo at 100 °C for 2 hours, thereby obtaining a treated film D-2. The evaluation results of the film D-2 are shown in Table 1.

Comparative Example 5

A treated film B-3 was obtained in the same manner as in Comparative Example 1, except that in Comparative Example 1, the untreated film B was used in place of the untreated film A. The evaluation results are shown in Table 1.
A treated film D-3 was obtained in the same manner as in Comparative Example 1, except that in Comparative Example 1, the untreated film D was used in place of the untreated film A. The evaluation results are shown in Table 1.

Table 1

| | Film No. | Crosslinking atmosphere | Pressure (MPa) | Temperature (°C) | Time (min) | Residual solvent (%) | Degree of swelling (%) | Linear expansion coefficient ppm/°C |
|---|---|---|---|---|---|---|---|---|
| | A | Untreated | | | | 10 | Dissolved | 75 |
| Example 1 | A-1 | Superheated water vapor | 0.1 | 150 | 15 | 0.9 | 350 | 53 |
| Example 2 | A-2 | | | | 60 | 0.5 | 220 | 52 |
| Example 3 | A-3 | | | 200 | 15 | 0.7 | 210 | 53 |
| Example 4 | A-4 | | | | 60 | 0.4 | 180 | 50 |
| Comparative Example 1 | A-5 | Saturated water vapor | 0.48 | 150 | 60 | 3.2 | 230 | 57 |
| | B | Untreated | | | | 12 | Dissolved | 78 |
| Example 5 | B-1 | Superheated water vapor | 0.1 | 200 | 60 | 0.3 | 210 | 49 |
| Comparative Example 2 | B-2 | Dry air | 0.1 | 200 | 60 | 3.4 | Dissolved | 65 |
| Comparative Example 5 | B-3 | Saturated water vapor | 0.48 | 150 | 60 | 3.2 | 220 | 56 |
| | C | Untreated | | | | 13 | Dissolved | 75 |
| Example 6 | C-1 | Superheated water vapor | 0.1 | 150 | 60 | 0.7 | 230 | 55 |
| Comparative Example 3 | C-2 | Dry air | 0.1 | 150 | 60 | 4.5 | Dissolved | 72 |
| | D | Untreated | | | | 11 | Dissolved | 65 |
| Example 7 | D-1 | Superheated water vapor | 0.1 | 150 | 60 | 0.7 | Dissolved | 54 |
| Comparative Example 4 | D-2 | Dry air | 0.1 | 150 | 60 | 5.1 | Dissolved | 58 |
| Comparative Example 6 | D-3 | Saturated water vapor | 0.48 | 150 | 60 | 2.5 | Dissolved | 56 |

As is clear from Examples 1 to 6, not only the films containing a cyclic olefin based polymer having a hydrolyzable silyl group as treated by the method according to the invention are low in the amount of residual solvent and small in the linear expansion coefficient as compared with the films as treated by the usual drying method using dry air, but also since they are crosslinked, they are not dissolved in but merely swollen by a usual solvent, whereby their chemical resistance is enhanced. Incidentally, according to the treatment with a saturated water vapor in Comparative Example 1, though the crosslinking is formed so that the chemical resistance is enhanced, the amount of residual solvent is high as compared with that in the films as obtained by the treatment according to the invention.

On the other hand, since the film obtained in Example 7 is a film using a cyclic olefin based polymer not having a hydrolyzable silyl group, even when the treatment according to the invention was carried out, the crosslinking was not formed so that an enhancement in the chemical resistance was not acknowledged. However, it is clear from the comparison with Comparative Examples 4 and 6 that an effect for reducing the residual solvent is remarkable.

Example 8

The untreated film E after primary drying as obtained in Reference Example 5 was charged in a vacuum dryer having an internal volume of 90 L and dried while feeding a superheated water vapor at 120 °C at a flow rate of 10 NL/min. Incidentally, a vacuum line of the dryer was opened to the air, and the internal pressure was an atmospheric pressure (0.1 MPa). The evaluation results of a sample A-1 having been subjected to this treatment for from 30 minutes to 120 minutes are shown in Table 2. Furthermore, as a comparative example, the results of a sample A-2 as obtained by carrying out the same treatment until the primary drying and drying by changing only the atmosphere of a superheated water vapor to air are also shown in the table. Incidentally, the film as obtained by the treatment with a superheated water vapor had a good material quality, was free from deficiency by the surface inspection, and was not hindered with respect to the function and mechanical strength, and so on.

Table 2 Amount of residual solvent in film (unit: %)

| Sample No. | Drying atmosphere | | Drying time (min) | | |
|---|---|---|---|---|---|
| | | 0 | 30 | 60 | 120 |
| A-1 | Superheated water vapor | 18.2 | 8.04 | 5.99 | 3.87 |
| A-2 | Dry air | 18.2 | 18.2 | 18.2 | 18.2 |

Example 9

The untreated film F as obtained in Reference Example 6 was charged in a vacuum dryer having an internal volume of 90 L and dried while feeding a mixed gas of a superheated water vapor at 110 °C and air at a flow rate of 10 NL/min. The air was mixed for the purpose of preventing condensation from occurring, and a volume ratio of the superheated water vapor to air was 7/3. A vacuum line of the dryer was opened to the air, and the internal pressure was an atmospheric pressure (0.1 MPa). The evaluation results of a sample B-1 having been subjected to this treatment for from 15 minutes to 60 minutes are shown in Table 3. Furthermore, as a comparative example, the results of a sample A-2 as obtained by carrying out the same treatment until the primary drying and drying by changing only the mixing ratio of the superheated water vapor to air to 3/7 are also shown in the table. Incidentally, the film as obtained by the treatment with a superheated water vapor had a good material quality, was free from deficiency by the surface inspection, and was not hindered with respect to the function and mechanical strength, and so on.

Table 3 Amount of residual solvent in film (unit: %)

| Sample No. | Drying atmosphere [volume ratio] | Drying time (min) | | | |
|---|---|---|---|---|---|
| | | 0 | 30 | 60 | 120 |
| B-1 | (Superheated water vapor)/(Dry air) = 7/3 | 8.7 | 0.1 | 0.0 | 0.0 |
| B-2 | (Superheated water vapor)/(Dry air) = 3/7 | 8.7 | 1.2 | 0.6 | 0.5 |

INDUSTRIAL APPLICABILITY

According to the method of the invention, films or sheets containing an optionally crosslinked organic polymer having a high degree of crosslinking and containing a little amount of residual solvent are obtained within a short period

of time under a low pressure. Since these films or sheets have a low linear expansion coefficient and excellent solvent resistance and dimensional stability, they are useful for applications of optical materials such as substrates for display devices, for example, TFT type LCD, STN type LCD and PDP, and optical recording substrates of, for example, CD, MD and DVD and as electronic and electric parts, fuel batteries, and the like.

## Claims

1. A method for treatment of a film or sheet, which is **characterized by** bringing a film or sheet containing an organic polymer into contact with a gas containing a superheated water vapor.

2. The method for treatment of a film or sheet according to claim 1, wherein the organic polymer is a cyclic olefin based polymer.

3. The method for treatment of a film or sheet according to claim 2, wherein the cyclic olefin based polymer is a cyclic olefin based polymer containing a structural unit (a) represented by the following formula (1-1) or a structural unit (b) represented by the following formula (1-2):

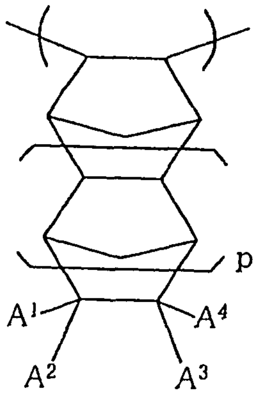

(1-1)

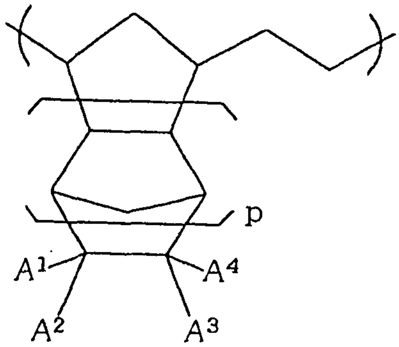

(1-2)

[in the formulae (1-1) and (1-2), $A^1$ to $A^4$ each independently represents a hydrogen atom, a halogen atom, an alkyl group having from 1 to 20 carbon atoms, a halogenated alkyl group, an aryl group, an alkoxy group, an alkoxycarbonyl group, or a cycloalkyl group having from 4 to 15 carbon atoms. Also, $A^1$ to $A^4$ include an alkylene group, a carboimido group, and an ester group as formed from $A^1$ and $A^2$, $A^1$ and $A^3$, or $A^2$ and $A^4$. p represents an integer of from 0 to 2.]

4. The method for treatment of a film or sheet according to claim 2, wherein the cyclic olefin based polymer is a cyclic olefin based polymer containing the structural unit (a) according to claim 3 and a structural unit (c) represented by the following formula (2-1), or containing the structural unit (b) according to claim 3 and a structural unit (d) represented by the following formula (2-2):

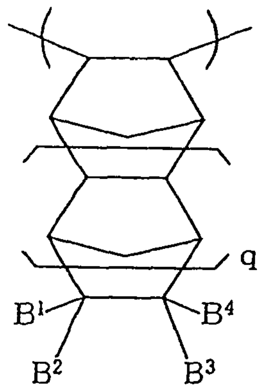

(2-1)

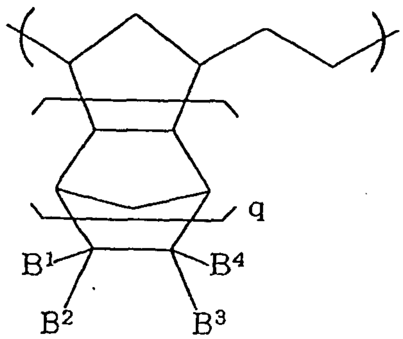

(2-2)

[in the formulae (2-1) and (2-2), $B^1$ to $B^4$ each independently represents a hydrogen atom, a halogen atom, an alkyl group having from 1 to 20 carbon atoms, a halogenated alkyl group, an aryl group, an alkoxy group, an alkoxycarbonyl group, a cycloalkyl group having from 4 to 15 carbon atoms, or a hydrolyzable silyl group, and at least one of $B^1$ to $B^4$ represents a hydrolyzable silyl group. Also, $B^1$ to $B^4$ include an alkylene group formed from $B^1$ and $B^3$, or $B^2$ and $B^4$. q represents an integer of from 0 to 2.]

**5.** The method for treatment of a film or sheet according to claim 4, wherein a compound capable of generating an acid at the treatment temperature is used simultaneously.

**6.** The method for treatment of a film or sheet according to claim 1, wherein the organic polymer is an aromatic polymer.

**7.** The method for treatment of a film or sheet according to claim 6, wherein the aromatic polymer has a sulfonic group.

**8.** The method for treatment of a film or sheet according to any one of claims 1 to 7, wherein the gas containing a superheated water vapor has a temperature of from 100 to 300 °C and a pressure of from 0.001 to 0.5 MPa.

**Amended claims under Art. 19.1 PCT**

**1.** (After the amendment)
A method for treatment of a film or sheet, which is **characterized by** bringing a film or sheet containing a cyclic olefin based polymer or an aromatic polymer having a sulfonic group into contact with a gas containing a superheated water vapor.

**2.** (Cancelled)

**3.** (After the amendment)
The method for treatment of a film or sheet according to claim 1, wherein the cyclic olefin based polymer is a cyclic olefin based polymer containing a structural unit (a) represented by the following formula (1-1) or a structural unit (b) represented by the following formula (1-2):

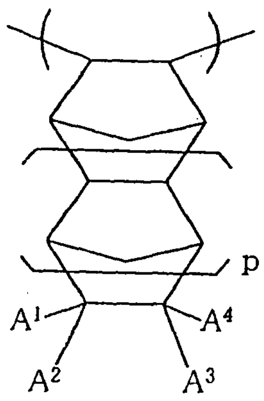

(1-1)

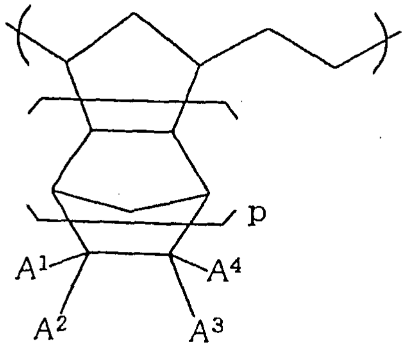

(1-2)

[in the formulae (1-1) and (1-2), $A^1$ to $A^4$ each independently represents a hydrogen atom, a halogen atom, an alkyl group having from 1 to 20 carbon atoms, a halogenated alkyl group, an aryl group, an alkoxy group, an alkoxycarbonyl group, or a cycloalkyl group having from 4 to 15 carbon atoms. Also, $A^1$ to $A^4$ include an alkylene group, a carboimido group, and an ester group as formed from $A^1$ and $A^2$, $A^1$ and $A^3$, or $A^2$ and $A^4$. p represents an integer of from 0 to 2.]

**4.** (After the amendment)
The method for treatment of a film or sheet according to claim 1, wherein the cyclic olefin based polymer is a cyclic olefin based polymer containing the structural unit (a) according to claim 3 and a structural unit (c) represented by the following formula (2-1), or containing the structural unit (b) according to claim 3 and a structural unit (d) represented by the following formula (2-2):

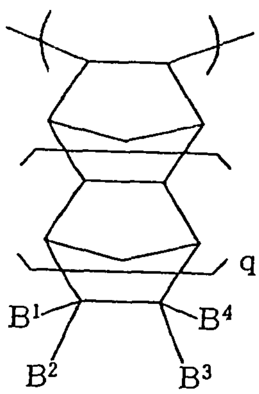

(2-1)

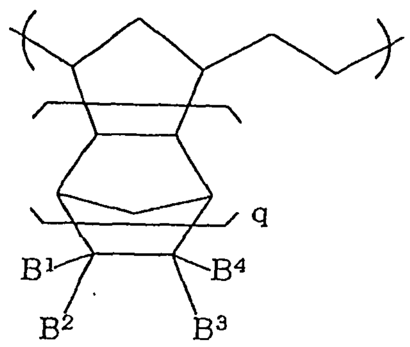

(2-2)

[in the formulae (2-1) and (2-2), $B^1$ to $B^4$ each independently represents a hydrogen atom, a halogen atom, an alkyl group having from 1 to 20 carbon atoms, a halogenated alkyl group, an aryl group, an alkoxy group, an alkoxycarbonyl group, a cycloalkyl group having from 4 to 15 carbon atoms, or a hydrolyzable silyl group, and at least one of $B^1$ to $B^4$ represents a hydrolyzable silyl group. Also, $B^1$ to $B^4$ include an alkylene group formed from $B^1$ and $B^3$, or $B^2$ and $B^4$. q represents an integer of from 0 to 2.]

**5.** The method for treatment of a film or sheet according to claim 4, wherein a compound capable of generating an acid at the treatment temperature is used simultaneously.

**6.** (Cancelled)

**7.** (Cancelled)

**8.** (After the amendment)
The method for treatment of a film or sheet according to any one of claims 1, 3, 4 and 5, wherein the gas containing a superheated water vapor has a temperature of from 100 to 300 °C and a pressure of from 0.001 to 0.5 MPa.

**Statement under Art. 19.1 PCT**

Claim 1 was amended to limit the scope of the organic polymer to a cyclic olefin based polymer or an aromatic polymer having a sulfonic group, thereby further clarifying the applicable scope of the invention.

By amending claim 1 as above, the subject matters of claims 2, 6 and 7 were included therein, so that claims 2, 6 and 7 were cancelled.

Dependency of claims 3, 4 and 8 was changed by the above amendment or cancellation. Therefore, the corresponding portions were amended.

Document 1 (EP 1195397) describes a method of producing a crosslinking material by contacting a composition containing a specific cyclic olefin polymer with hot water of 50°C or higher or water vapor, and a method of producing a film, sheet or coating by contacting a composition containing a specific cyclic olefin polymer with hot water of 50°C or higher or water vapor. Contrary to this, the present invention relates to a method of treatment of a film or sheet, **characterized by** bringing the film or sheet into contact with a gas containing a superheated water vapor, for the purpose of a film or sheet of a cyclic olefin based polymer having reduced residual solvent and if necessary crosslinked, or an aromatic polymer having a sulfonic group. Document 1 does not disclose al all that a residual solvent is decreased, and to achieve this, the composition is contacted with a gas containing a superheated water vapor.

Document 2 (JP 6-273888 A1) discloses a treatment with a superheated water vapor as one of heat treatment methods that make a polyester film as a support of a silver halide photographic material difficult to curl. By making the amendments of claim 1 as above, the present application differs from the technology described in Document 2 in the effect and object substance.

## INTERNATIONAL SEARCH REPORT

International application No.
PCT/JP2004/002211

A. CLASSIFICATION OF SUBJECT MATTER
Int.Cl$^7$ C08J7/00

According to International Patent Classification (IPC) or to both national classification and IPC

B. FIELDS SEARCHED

Minimum documentation searched (classification system followed by classification symbols)
Int.Cl$^7$ C08J7/00

Documentation searched other than minimum documentation to the extent that such documents are included in the fields searched

| | | | |
|---|---|---|---|
| Jitsuyo Shinan Koho | 1926-2004 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | EP 1195397 A1 (JSR CORP.),<br>10 April, 2002 (10.04.02),<br>Page 15, line 55; page 27, line 47 to page 28, line 51; page 29, line 43<br>& JP 2003-48918 A<br>Column 1, line 2 to column 2, line 8; column 2, lines 6 to 22; column 3, lines 2 to 6; column 17, lines 29 to 37<br>& US 2002/42461 A1 | 1-5,8<br>6,7 |
| X<br>A | JP 6-273888 A (Fuji Photo Film Co., Ltd.),<br>30 September, 1994 (30.09.94),<br>Column 1, lines 2 to 18<br>(Family: none) | 1,6,8<br>2-5,7 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>12 March, 2004 (12.03.04) | Date of mailing of the international search report<br>30 March, 2004 (30.03.04) |
| Name and mailing address of the ISA/<br>Japanese Patent Office<br><br>Facsimile No. | Authorized officer<br><br>Telephone No. |

Form PCT/ISA/210 (second sheet) (January 2004)